# EUROPEAN PATENT APPLICATION

(11) **EP 1 119 160 A2**
(43) Date of publication of application: **25.07.2001**
(21) Application number: 01100181.5
(22) Date of filing: 17.01.2001
(51) Int. Cl.: H04M 1/60, H04B 1/38

(54) **Universal hands-free kit for cellular phone**

(30) Priority: 21.01.2000 IT MI000069
(71) Applicant: Rizzi, Paolina, 24100 Bergamo (IT)
(72) Inventor: Rizzi, Paolina, 24100 Bergamo (IT)
(74) Representative: Petruzzelli, Antonio European Patent Attorney

(57) **Abstract**

A hands-free kit for cellular phone (2) which can be installed in a car and which is formed by a universal fixed system part and by a removable system part wherein the fixed system part comprises: an electronic power unit (1), a microphone (3) connected electrically to the electronic power unit (1), a loudspeaker (5) connected electrically to the electronic power unit (1), a cable (7) with several wires which is constituted by the poles for the signals from and to the power unit (1), by the wires of the power supply of the cellular phone and by the coaxial cable for the external aerial (19) of the car, one end (11) of said cable (7) providing a first connector (13) for connecting one terminal of the poles for the signals from and to the power unit (1) and a terminal of the power supply wires of the cellular phone to the electronic power unit (1), and a second connector (15) for connecting a terminal of the coaxial cable to the external aerial (19) of the car, the remaining end (17) of said cable (7) with several wires providing a block (9) which can be removably engaged with the mobile system part and capable of creating an electrical connection between the remaining terminals of the wires of said cable (7) with several wires and said mobile system part; and wherein said mobile system part is formed by an active support (33) of the cellular phone (2) inside whereof the electronics for configuration between the cellular phone (2) and the power unit (1) is integrated.

## Description

The present invention relates to a hands-free kit for a cellular phone to be installed in a car.

Most hands-free kits nowadays available on the market comprise an electronic power unit, a microphone connected electrically to the electronic power unit, a loudspeaker connected electrically to the electronic power unit, an electrical connection cable between the electronic power unit and the cellular phone and a support for the cellular phone.

One of the major disadvantages of a traditional hands-free kit for cellular phone consists in the fact that it can only be used for cellular phones of a specific manufacturer, and often even limited to one single series of cellular phones of that same manufacturer. This means that a hands-free kit installed in a car by the owner for the cellular phone which he or she possesses is not capable of functioning with a cellular phone of a different type which the same owner may buy in the future or with a cellular phone of a different type, for example belonging to a passenger.

This occurs since cellular phones of different makes or of the same make but of different series require hands-free kits with special supports and also with special configuration electronics, that is the electronics which makes the cellular phone and the power unit compatible one with the other, allowing them to interact.

Due to the fact that in many hands-free kits nowadays available on the market the configuration electronics is integrated in the power unit, those who change cellular phones are currently forced to change also the power unit and with it the entire hands-free kit.

Other hands-free kits currently available commercially, in order to avoid this disadvantage, separate the configuration electronics from the power unit, enclosing it in a case embedded in the cable for electrical connection between the cellular phone and the power unit, and using a universal power unit, that is to say a power unit capable of operating independently of the chosen cellular phone. In this situation those who change cellular phones can reuse the universal power unit of the hands-free kit, yet have to replace the cable for electrical connection between the cellular phone and the power unit. Given that the cable for connection between the cellular phone and the power unit also comprises the coaxial cable for the external aerial of the car, they also have to connect said coaxial cable to the same aerial.

With traditional hands-free kits there is therefore a strong disadvantage for the user who decides to change cellular phones, due both to the need to change the whole hands-free kit or costly parts thereof, and also the need to carry out each time a tedious operation so as to connect the new hands-free kit to the aerial of the car.

Some hands-free kits also suffer the disadvantage of leaving the cable for connection between the cellular phone and the power unit freely dangling, which cable also carries the coaxial cable of the external aerial of the car, therefore with the possibility that, due to the vibrations always present in the car, the coaxial cable disconnects from the external aerial, causing automatic switching onto the aerial of the cellular phone and therefore causing a distinct worsening in the quality of the signals received and transmitted due to the screening effect of the chassis of the same car.

Finally a category is nowadays available on the market of hands-free kits which are attached directly to the cigarette lighter of the car, but which are penalised by the fact that they use the aerial of the cellular phone for reception and transmission of signals and in that the actual weight of the kit and of the cellular phone mounted thereon creates a tilting torque which tends to move the cellular phone from its correct position.

The object of the present invention is therefore that of providing a hands-free kit for cellular phone to be installed in a car which avoids the disadvantages suffered by a traditional hands-free kit, and in particular an object of the present invention is that of providing a hands-free kit which can be adapted to the various models of cellular phone on the market without the need to replace costly parts of the kit.

Another object of the present invention is that of providing a hands-free kit which can be adapted with versatility to the various cellular phone models available on the market.

Yet another object of the present invention is that of providing a hands-free kit capable of offering high performances in terms of quality of the transmission and reception signals.

Yet another object of the present invention is that of providing a hands-free kit with simple construction and manner of use.

These objects are achieved by a hands-free kit for cellular phone which can be installed in a car and which is formed by a removable and replaceable system part and by a universal fixed system part in turn comprising: a universal electronic power unit, a universal microphone electrically connected to the electronic power unit, a universal loudspeaker electrically connected to the electronic power unit, a cable with several wires which is constituted by the poles for the signals from and to the power unit, the power supply wires of the cellular phone and the coaxial cable for the external aerial of the car, one end of said cable with several wires providing a first connector for connecting a terminal of the poles for the signals from and to the power unit and a terminal of the power supply wires of the cellular phone to the electronic power unit, and a second connector for connecting a terminal of the coaxial cable to the external aerial of the car, the other end of said cable with several wires providing a block which can be removably engaged with said mobile part of the system, and capable of forming an electrical connection between said cable with several wires and said mobile part of the system; and wherein said mobile and replaceable part of the system is formed by an active support of the cellular phone inside whereof the electronics for configuration between the cellular phone and the power unit is integrated.

Advantageously the fixed system part, once installed in the car, does not have to be regulated to allow operation of the hands-free kit whenever the cellular phone is inserted in the relevant support, nor does it have to be modified or replaced should the original cellular phone have been changed with a cellular phone of a different series or different trade mark.

In the case of a change of cellular phone only the removable system part is to be replaced, that is to say the active support of the cellular phone. In this respect, even more advantageously, the block for the electrical connection of the cable with several wires to the active support of the cellular phone has such a shape as to be snap-engaged in the support of the cellular phone in such a way that the electrical contact between the block and the support of the cellular phone can be achieved by a very simple operation, which is also the only operation required for making the system operational.

These and other aspects of the present invention will be made clearer on reading the following preferred embodiment of the invention, which refers to the single accompanying drawing illustrating the components of the hands-free system for cellular phone to be installed in a car.

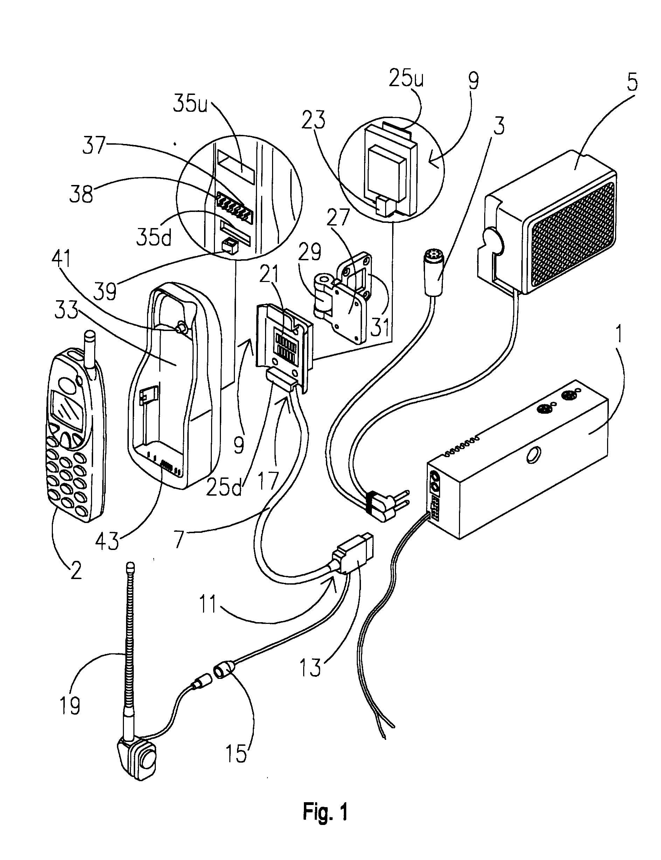

The accompanying drawing 1 includes, indicated in a circle, a perspective enlargement of a portion of the back of the support of the cellular phone of the present invention and an enlargement of the back of the connection block of the present invention.

The hands-free kit for cellular phone which can be installed in a car comprises a fixed system part and a mobile system part.

The fixed system part comprises an electronic power unit 1, a microphone 3 electrically connected to the electronic power unit 1, a loudspeaker 5 also electrically connected to the electronic power unit 1, a wire carrier cable 7 and a block 9 for connection to the mobile system part whose function is to be discussed hereinbelow.

The electronic power unit 1 can be fixed in any position inside the car interior in such a way as to be in any case concealed, for example in the boot or below the steering wheel.

The loudspeaker 5 forms part of the hands-free kit unless the car already has a radiophonic system, in which case it is possible to exploit one of the loudspeakers of the radiophonic system which has to be connected to the electronic power unit.

The microphone 3 of the hands-free kit is preferably positioned to the left of the dashboard on a level with the rear-view mirror, so as to be sufficiently close to the mouth of the driver.

The wire carrier cable 7 comprises the poles for the transmission and reception signals from and to the electronic power unit 1, the wires of the power supply of the cellular phone and the coaxial cable of the external aerial.

One end 11 of the wires carrier cable 7 has a first connector 13 for electrical connection to the electronic power unit 1 of one terminal of the poles for the signals from and to the electronic power unit 1, and of one terminal of the wires of the power supply of the cellular phone, while a second connector 15 forms the screened connection of one terminal of the coaxial cable to the external aerial 19 of the car.

At the opposite end 17 of the wire carrier cable 7 the connection block 9 is mounted, comprising on the front wall a contact board 21 with contacts for the remaining terminal of the poles for the signals from and to the electronic power unit 1 and of the wires of the power supply of the cellular phone.

The block 9 for connection to the mobile system part also comprises, integrally with the rear wall and separated from the contact board 21, a screened connector 23 for the remaining terminal of the coaxial cable of the external aerial 19.

The connection block 9 is finally equipped on the front wall with a pair of horizontal fins 25u, 25d, one above 25u and one below 25d the contact board 21, to form a snap-hook with the removable system part, as we will see hereinbelow.

The connection block 9 can be attached to a plate 27 supported rotatingly by a pin 29 of a bracket 31 in turn attached by screws in a convenient point inside the car interior. In particular, since, as we will see, the connection block has to hold the support of the cellular phone, it will preferably be attached to the right of the dashboard approximately above the gear lever, so as to be easily accessible to the sight of the driver. The possibility of rotation for the connection block 9 allows the optimal regulation of its positioning in relation to the driver.

Attachment of the connection block 9 to the car interior can however be performed in a different way from that described given that this does not constitute a salient feature of the invention.

The mobile part of the hands-free kit is however formed by an active support 33 of the cellular phone 2.

The back of the support 33 is provided with two horizontal slots which form the seats 35u, 35d for snap-hooking the fins 25u, 25d of the connection block 9, and with a contact board 37 positioned between the seats 35 formed by small mobile conductive pistons 38 each one corresponding to one of the contacts of the contact board 21 of the connection block 9.

Below the lower seat 35d a screened connector 39 is also provided, integral with the rear wall of the support 33 and which can be connected to the screened connector 23 of the coaxial cable of the external aerial.

An additional coaxial cable extends from the screened connector 39 inside the support 33 and carries the external aerial signal directly to the cellular phone 2 via an external aerial radio frequency connector 41 mounted on the upper portion of the rear wall of the support 33.

Inside the support 33 of the cellular phone 2 the configuration electronics is integrated which determines the interface between the cellular phone 2 and the electronic power unit 1.

The base of the cellular phone 2 and that of the support 33 of the cellular phone 2 are finally provided with corresponding contacts, of which only the contacts 43 of the support 33 are shown, to ensure the electrical connection between the cellular phone 2 and support 33 of the cellular phone 2.

Functioning of the hands-free kit is briefly the following.

When the user is not using the hands-free kit the connection block 9 can be covered by a small cover not shown and which, in addition to protecting the contact board 21, can be used to conceal externally the view of the hands-free system itself.

When the user decides to use the hands-free kit the small cover of the block 9, if provided, is removed and the mobile support 33 is hooked to the connection block 9. More specifically the support block 33 is made to slide vertically upwards on the rear wall of the support 33, until the upper fin 25u enters the seat 35u. The upper end wall of the fin 25u, during vertical sliding, press and loads a spring which, at the end of the stroke of the block 9, pushes the lower fin 25d downwards into the corresponding seat 35d.

During engaging between the fins 25d, 25u and the corresponding seats 35d, 35u the small conductive pistons 38 are compressed axially against the corresponding contacts of the contact board 21 of the connection block 9, while the screened connector 23 of the coaxial cable is inserted in the corresponding screened connector 39, in such a way that the coaxial cable in the support 33 is electrically connected to the external aerial radio frequency connector 41.

When the cellular phone 2 is positioned on the relative support 33, the same cellular phone 2 forms the electrical connection with the electronic power unit 1 via the contacts between the cellular phone 2 and support 33 and the contacts between the support 33 and connection block 9, while the aerial radio frequency connector 41 inserted in the corresponding connector, not shown and provided on the back of the cellular phone 2, causes switching of the aerial, enabling the external aerial 19 and disabling the aerial of the cellular phone 2.

Advantageously, in the present invention, the aerial connector 23 is made separately from the contact board 21 so as to create a screened connection between the two coaxial cables to be connected and definitively a completely screened path for the signal to be received or to be transmitted by the external aerial 19 to the cellular phone 2.

At this point the system is ready to operate, that is to say to send to the user via the loudspeaker 5 the sound signals received from the exterior and to send to the exterior the sound signals emitted by the user via the microphone 3.

The fixed system part, once installed for the first time, does not have to be regulated again nor modified not even when the user decides to change cellular phones. In this case the present invention provides a system wherein only the active support containing the electronics for configuration between the cellular phone and power unit has to be replaced and, thanks to the presence of the block 9 for connection of the fixed system part, it will simply be necessary to hook the new support to the block as described above in order to make the system operational once again.

The hands-free kit for cellular phone of the present invention therefore provides a universal fixed system part which goes from the electronic power unit to the connection block, and forms a mobile and removable part, that is to say the support of the cellular phone, dedicated to the cellular phone itself.

The term "universal fixed system" refers to a fixed system capable of functioning correctly for any make or series of cellular phones.

In the present invention the fixed system part is made universal by separating the configuration electronics from the electronics of the power unit and adopting electrical power supply lines carrying effective power supply voltages for the whole range of cellular phones available on the market.

In the present embodiment for example it can be foreseen to extract from the car battery three power supplies with different voltages at 12V, 9V and 5V and to provide in the power unit a voltage regulator in order to be able to supply each cellular phone with its own operating voltage without producing excessive heat dissipations which are damaging to the whole system.

Naturally some changes can be devised for the present embodiment without thereby departing from the more general principle provided by the invention.

## Claims

1. A hands-free kit for cellular phone (2) which can be installed in a car and which is formed by a universal fixed system part and a removable system part, characterised in that the fixed system part comprises: an electronic power unit (1), a microphone (3) connected electrically to the electronic power unit (1), a loudspeaker (5) connected electrically to the electronic power unit (1), a cable (7) with several wires which is constituted by the poles for the signals from and to the power unit (1), by the wires of the power supply (1) for the cellular phone and by the coaxial cable for the external aerial (19) of the car, one end (11) of said cable (7) providing a first connector (13) for connecting a terminal of the poles for the signals from and to the power unit (1) and a terminal of the wires of the power supply of the cellular phone to the electronic power unit (1), and a second connector (15) for connecting a terminal of the coaxial cable to the external aerial (19) of the car, the remaining end (17) of said cable (7) with several wires providing a block (9) which can be removably engaged with the removable system part, said block (9) holding means which, in the condition of engaging between the block (9) and the removable system part, form an electrical connection between the remaining terminals of the wires of said cable (7) with several wires and said removable system part; and in that said removable system part is formed by an active support (33) of the cellular phone (2) inside whereof the electronics for configuration between the cellular phone (2) and the power unit (1) is integrated.

2. A hands-free kit for cellular phone (2) which can be installed in a car according to the previous claim, characterised in that said removable engaging between said block (9) and said active support (33) is provided by snap-hooking parts formed on the block and on the support of the cellular phone.

3. A hands-free kit for cellular phone (2) which can be installed in a car according to any one of the previous claims, characterised in that said means for the electrical connection between the remaining terminals of the wires of said cable (7) with several wires and said removable system part comprise a contact board (21) with contacts for the remaining terminals of the poles for the signals from and to the power unit (1) and for the remaining terminals of the wires of the power supply of the cellular phone (2).

4. A hands-free kit for cellular phone (2) which can be installed in a car according to any one of the previous claims, characterised in that said means for the electrical connection between the remaining terminals of the wires of said cable (7) with several wires and said mobile system part also comprise a screened connector (23) for the remaining terminal of the coaxial cable of the external aerial (19).

5. A hands-free kit for cellular phone (2) which can be installed in a car according to any one of claims 2 to 4, characterised in that said active support (33) of the cellular phone (2) comprises a contact board (37) with contacts which each correspond to one of the contacts of the contact board (21) of the block (9) and, a screened connector (39) which can be connected to the corresponding screened connector (23) of the block (9).

6. A hands-free kit for cellular phone (2) which can be installed in a car according to the previous claim, characterised in that said screened connector (39) of the support (33) of the cellular phone (2) extends with a second coaxial cable attached to the interior of the support (33) of the cellular phone (2), said second coaxial cable terminating with an external aerial radio frequency connector (41), attached externally to the body of the support (33) of the cellular phone (2), to be connected to the cellular phone (2) to carry out switching from the aerial of the cellular phone (2) to the external aerial (19).
